# EUROPEAN PATENT APPLICATION

(11) **EP 4 535 525 A1**
(43) Date of publication of application: **09.04.2025**
(21) Application number: 22953584.4
(22) Date of filing: 04.08.2022
(51) Int. Cl.: H01M 50/186, H01M 50/184, H01M 50/105

(54) **HOUSING, ELECTROCHEMICAL APPARATUS, AND ELECTRONIC DEVICE**

(71) Applicant: Ningde Amperex Technology Limited, Ningde, Fujian 352100 (CN)
(72) Inventor: LI, Xun, Ningde, Fujian 352100 (CN)
(74) Representative: Icosa
(86) International application number: PCT/CN2022/110313
(87) International publication number: WO 2024/026775

(57) **Abstract**

This application discloses a housing, an electrochemical apparatus, and an electronic device. The housing includes an accommodating portion and a sealing portion. The accommodating portion defines an accommodating chamber. The sealing portion is connected to an outer surface of the accommodating portion. The housing includes a first adhesive layer. An edge of the sealing portion is provided with a first notch, and the first notch has a first edge and a second edge. The first adhesive layer is disposed at the sealing portion; and in a thickness direction of the housing, a projection of the first adhesive layer covers at least part of the first notch and connects the first edge and the second edge. When a second extension wall receives an impact, part of an impact force is transferred to the first adhesive layer and is released via the first adhesive layer. Thus, the impact force received by the second extension wall is accordingly reduced, thereby reducing the risk of the second extension wall being torn. To be specific, the housing provided in some embodiments of this application can reduce the risk that tear is likely to occur at the notch of the sealing portion of the current housing.

## Description

### TECHNICAL FIELD

This application relates to the field of battery technologies, in particular, to a housing, an electrochemical apparatus, and an electronic device.

### BACKGROUND

At present, electrochemical apparatuses are widely used in electronic devices such as mobile phones, tablets, and notebook computers to provide power for corresponding electronic products. An electrochemical apparatus includes a housing, an electrode assembly, a tab, and an electrolyte. The electrode assembly includes a first electrode plate and a second electrode plate having opposite polarities, and a separator disposed between the first electrode plate and the second electrode plate. The tab is connected to the electrode assembly and partially extends out of the housing to form a conductive terminal of the electrochemical apparatus.

The housing of some electrochemical apparatuses is made of a flexible material and includes an accommodating portion and a sealing portion extending out of a side wall of the accommodating portion. The accommodating portion defines an accommodating chamber for accommodating the electrode assembly and the electrolyte; the sealing portion is a portion for sealing the housing through a process such as thermal sealing; and the tab of the electrochemical apparatus also extends out of the housing through the sealing portion. To reduce space occupied by the electrochemical apparatus, the sealing portion is typically folded so as to be close to or attached to the side wall of the accommodating portion in the art.

For a housing with a square, L-shaped, or U-shaped accommodating portion, the sealing portion is usually provided with a notch at an outer edge corresponding to a corner of the side wall of the accommodating portion, to facilitate respective folding of portions of the sealing portion at two sides of the corner.

### SUMMARY

The inventors of this application have found in implementation of this application that electrochemical apparatuses often face scenarios where drop happens, and the provision of the foregoing notch makes the sealing portion of the housing prone to tearing at the notch, which may in turn cause electrolyte leakage of the electrochemical apparatus.

In view of the above problems in the prior art, this application is intended to provide a housing, an electrochemical apparatus, and an electronic device, to improve a current situation that a portion of a current sealing portion at the notch is likely to be torn.

According to a first aspect, this application provides a housing. The housing includes an accommodating portion and a sealing portion. The accommodating portion defines an accommodating chamber. The sealing portion is connected to an outer surface of the accommodating portion. The housing includes a first adhesive layer. An edge of the sealing portion is provided with a first notch, and the first notch has a first edge and a second edge. The first adhesive layer is disposed at the sealing portion, and in a thickness direction of the housing, a projection of the first adhesive layer covers at least part of the first notch and connects the first edge and the second edge. In some embodiments, the first edge and the second edge enclose the first notch.

When a second extension wall receives an impact, part of an impact force is transferred to the first adhesive layer and is released via the first adhesive layer. Thus, the impact force received by the second extension wall is accordingly reduced, thereby reducing the risk of the second extension wall being torn. To be specific, the housing provided in some embodiments of this application can reduce the risk that tear is likely to occur at the notch of the sealing portion of the current housing. In some embodiments, when viewed in the first direction, the first notch runs through the sealing portion. The use of this solution can also reduce the risk of continued inward tearing at the notch, thereby preventing electrolyte leakage.

In some embodiments, the accommodating portion includes a first wall, a second wall, and a connecting wall. The first wall and the second wall are disposed opposite each other in a first direction. The connecting wall connects the first wall and the second wall. The first wall, the second wall, and the connecting wall jointly enclose the accommodating chamber. The sealing portion is connected to the connecting wall. The first direction is the thickness direction of the housing.

In some embodiments, the connecting wall includes a first wall unit, a second wall unit, and a third wall unit connected sequentially along an edge contour of the first wall. When viewed in the thickness direction, an extension direction of the first wall unit intersects with an extension direction of the third wall unit; an outer surface of the second wall unit is recessed towards the accommodating chamber; and the first wall unit, the second wall unit, and the third wall unit jointly form a recessed corner structure. The sealing portion includes a first extension wall, a second extension wall, and a third extension wall. The first extension wall includes a first region. The first region is formed by extending outwards from a surface of the first wall unit. The second extension wall is formed by extending outwards from a surface of the second wall unit. An edge of the second extension wall is provided with the first notch. The third extension wall includes a third region. The third region is formed by extending outwards from a surface of the third wall unit. In the first direction, one end of the first extension wall and one end of the third extension wall are respectively connected to the connecting wall, and the other end of the first extension wall and the other end of the third extension wall extend towards the second wall.

In some embodiments, an edge of the second extension wall away from the second wall unit has a first sideline connected to the first region, the first extension wall further includes a second region connected to the first region, and the second region extends from the first sideline towards the second wall. An edge of the second extension wall away from the second wall unit has a second sideline connected to the third region, the third extension wall further includes a fourth region connected to the third region, and the fourth region extends from the second sideline towards the second wall.

In some embodiments, the first adhesive layer is fixedly adhered to the second region. The first region is attached and fixed to the first wall unit. During transportation, assembly, and use of the electrochemical apparatus, the first region does not move relative to the accommodating portion; whereas, the second region is not fixed to the first wall unit and thus may move relative to the first wall unit, thus affecting the fixation strength between the first region and the first wall unit. The adhesion between the first adhesive layer and the second region can restrain the second region, such that a movement degree of the second region relative to the first region is significantly reduced or the second region even cannot move relatively, thereby ensuring that the overall first extension wall is maintained at a vertically disposed state for a long time and preventing the electrochemical apparatus from occupying large space.

In some embodiments, the first adhesive layer is fixedly adhered to the fourth region. The third region is attached and fixed to the third wall unit. During transportation, assembly, and use of the electrochemical apparatus, the third region does not move relative to the accommodating portion; whereas, the fourth region is not fixed to the third wall unit and thus may move relative to the third wall unit, thus affecting the fixation strength between the third region and the third wall unit. The adhesion between the first adhesive layer and the fourth region can restrain the fourth region, such that a movement degree of the fourth region relative to the third region is significantly reduced or the fourth region even cannot move relatively, thereby ensuring that the overall third extension wall is maintained at a vertically disposed state for a long time and preventing the electrochemical apparatus from occupying large space.

In some embodiments, the first adhesive layer is fixedly adhered to the second wall unit. Since the second wall unit is made of a flexible material, the connection between the second wall unit and the first adhesive layer allows the second wall unit to release more of an impact force when the first adhesive layer receives the impact force, thereby reducing the risk of the first adhesive layer and the second extension wall being torn.

In some embodiments, the first notch is filled with the first adhesive layer.

In some embodiments, when viewed in the first direction, the first adhesive layer is circular, elliptic, or fan-shaped.

In some embodiments, the connecting wall includes a third wall unit, a fourth wall unit, and a fifth wall unit connected sequentially along the edge contour of the first wall. When viewed in the first direction, an extension direction of the third wall unit intersects with an extension direction of the fifth wall unit; an outer surface of the fourth wall unit is recessed towards the accommodating chamber; and the third wall unit, the fourth wall unit, and the fifth wall unit jointly form a recessed corner structure. The sealing portion further includes a fourth extension wall and a fifth extension wall. The fourth extension wall is formed by extending outwards from a surface of the fourth wall unit. An edge of the fourth extension wall is provided with a second notch. The fifth extension wall includes a sixth region, and the sixth region is formed by extending outwards from a surface of the fifth wall unit. In the first direction, one end of the fifth extension wall is connected to the connecting wall, and the other end of the fifth extension wall extends towards the second wall. The electrochemical apparatus further includes a second adhesive layer, and the second adhesive layer is disposed at the sealing portion and covers at least part of the second notch.

In some embodiments, an edge of the fourth extension wall away from the fourth wall unit has a third sideline connected to the third region, the third extension wall further includes a fifth region, and the fifth region extends from the third sideline towards the second wall. An edge of the fourth extension wall away from the fourth wall unit has a fourth sideline connected to the sixth region, the fifth extension wall further includes a seventh region, and the seventh region extends from the fourth sideline towards the second wall.

In some embodiments, when viewed in the first direction, the accommodating portion is L-shaped or U-shaped.

In some embodiments, a tensile strength of the first adhesive layer is σ₁ and a tensile strength of the second extension wall is σ₂, where 2 ≤ σ₁/σ₂ ≤ 10. Such setting allows the first adhesive layer to have a significantly higher tensile limit than the second extension wall, thereby frequently releasing the impact force for the second extension wall for a long time. Preferably, 3 ≤ σ₁/σ₂ ≤ 4.

In some embodiments, a peeling force between the first adhesive layer and the second extension wall is F₁. The sealing portion includes a metal material layer and an insulating material layer disposed on a surface of the metal material layer, the first adhesive layer is disposed on a surface of the insulating material layer, and a peeling force between the metal material layer and the insulating material layer is F₂, where 1.2 ≤ F₁/F₂ ≤ 10. Such setting ensures that an adhesion force between the first adhesive layer and the second extension wall is greater than an adhesion force between the metal material layer and the insulating material layer in the sealing portion. Even if slippage occurs between the first adhesive layer and the second extension wall, the slippage happens after slippage between the metal material layer and the insulating material layer in the sealing portion. To be specific, a larger adhesion force is ensured between the first adhesive layer and the second extension wall, thereby reducing the risk of separation of the first adhesive layer from the second extension wall during use of the electrochemical apparatus. Preferably, 1.2 ≤ F₁/F₂ ≤ 2.

In some embodiments, a hardness of the first adhesive layer is H₁ and a hardness of the second extension wall is H₂, where 1.3 ≤ H₁/H₂ ≤ 10. Preferably, 2 ≤ H₁/H₂ ≤ 4.

In some embodiments, the sealing portion is connected to an end of the connecting wall in the first direction.

According to a second aspect, this application further provides an electrochemical apparatus, where the electrochemical apparatus includes the foregoing housing.

With the foregoing housing, the electrochemical apparatus can reduce the risk that tear is likely to occur at the notch of the sealing portion of the current housing.

According to a third aspect, this application further provides an electronic device, where the electronic device includes the foregoing electrochemical apparatus. With the foregoing housing, the electronic device can reduce the risk that tear is likely to occur at the notch of the sealing portion of the current housing.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a schematic diagram of an electrochemical apparatus according to an embodiment of this application;
FIG. 2 is a schematic cross-sectional view of the electrochemical apparatus in FIG. 1 along line A-A;
FIG. 3 is a schematic locally enlarged view of a location B in FIG. 1;
FIG. 4 is a schematic locally enlarged view of a location C in FIG. 2;
FIG. 5 is a schematic diagram of an electrochemical apparatus according to another embodiment of this application; and
FIG. 6 is a schematic diagram of an electronic device according to an embodiment of this application.

### DETAILED DESCRIPTION

For ease of understanding this application, the following makes a more detailed description of this application with reference to the accompanying drawings and specific embodiments. It should be noted that when an element is referred to as being "fixed to", "fastened to", or "mounted to" another element, it may be directly fixed to the another element, or there may be one or more elements therebetween. When an element is referred to as being "connected to" another element, it may be directly connected to the another element, or there may be one or more elements therebetween. The terms "perpendicular", "horizontal", "left", "right", "inside", "outside", and similar expressions used in this specification are merely for description purposes.

Unless otherwise defined, all technical and scientific terms used in this specification shall have the same meanings as commonly understood by persons skilled in the art to which this application belongs. The terms used in the specification of this application are merely for description of specific embodiments rather than for limiting this application. The term "and/or" used in this specification includes any and all combinations of one or more associated items listed.

In addition, technical features involved in different embodiments of this application that are described below may be combined as long as they do not conflict with each other.

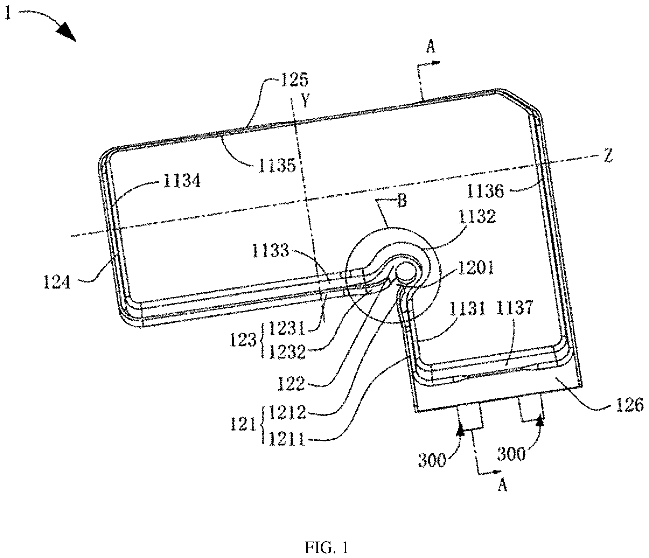

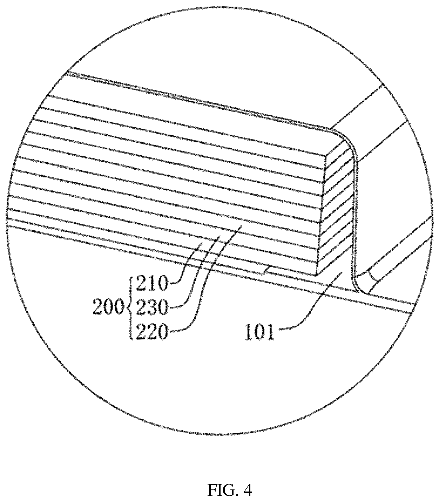

Reference is made to FIG. 1 to FIG. 4, where FIG. 1 to FIG. 4 are respectively a schematic diagram of an electrochemical apparatus 1 according to an embodiment of this application, a schematic cross-sectional view of the electrochemical apparatus 1 along line A-A, a schematic locally enlarged view of a location A, and a schematic locally enlarged view of a location B. The electrochemical apparatus 1 includes a housing 100, an electrode assembly 200, and a tab 300. The housing 100 is a mounting base and container for the other components of the electrochemical apparatus 1. The electrode assembly 200 is accommodated in the housing 100 and is a core component of the electrochemical apparatus 1 for implementing charge and discharge. One end of the tab 300 is connected to the electrode assembly 200, and the other end extends out of the housing 100 to be connected to an electrical load outside the electrochemical apparatus 1. Subsequently, the electrochemical apparatus 1 being a lithium-ion battery is used as an example for describing a specific structure of the electrochemical apparatus 1. It should be understood that in other embodiments of this application, the electrochemical apparatus 1 may alternatively be an electrochemical apparatus in another form, for example, a sodium-ion battery.

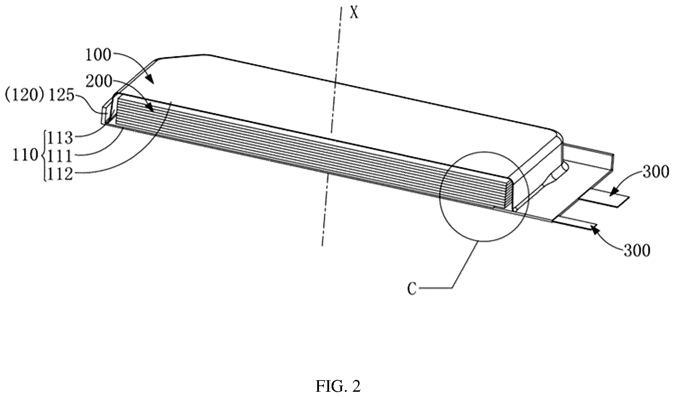

For the housing 100, reference is specifically made to FIG. 2. The housing 100 is made of a flexible material and constitutes the mounting base, container, and outer protective structure of the electrochemical apparatus 1. The housing 100 includes an accommodating portion 110 and a sealing portion 120. The accommodating portion 110 defines an accommodating chamber 101 for accommodating the electrode assembly 200, electrolyte, and part of the tab 300. The sealing portion 120 is connected to an outer surface of the accommodating portion 110, and is a sealing position formed through stacking and compositing in a hot melting manner, an adhesion manner, or the like in the housing 100.

The accommodating portion 110 includes a first wall 111, a second wall 112, and a connecting wall 113. The first wall 111 and the second wall 112 are basically the same in shape and are disposed opposite each other in a first direction X. The connecting wall 113 is located between the first wall 111 and the second wall 112 and is connected to the first wall 111 and the second wall 112 respectively. The first wall 111, the second wall 112, and the connecting wall 113 jointly enclose the accommodating chamber 101. In the specification of this application, the "first direction" refers to a thickness direction of the housing 100.

Reference is specifically made to FIG. 1. In this embodiment, when viewed in the first direction X, the accommodating portion 110 is L-shaped. Correspondingly, the connecting wall 113 includes a first wall unit 1131, a second wall unit 1132, a third wall unit 1133, a fourth wall unit 1134, a fifth wall unit 1135, a sixth wall unit 1136, and a seventh wall unit 1137 disposed sequentially along an edge contour of the first wall 111. When viewed in the first direction X, the first wall unit 1131 extends along a second direction Y shown in the figure; the second direction Y is perpendicular to the first direction X; the third wall unit 1133 extends along a third direction Z shown in the figure; and the third direction Z is perpendicular to both the first direction X and the second direction Y. The extension direction of the first wall unit 1131 intersects with the extension direction of the third wall unit 1133, and the second wall unit 1132 connects the first wall unit 1131 and the third wall unit 1133. When viewed in the first direction X, an outer surface of the second wall unit 1132 is recessed towards the accommodating chamber 101, for example, is a concave arc as shown in FIG. 1. The first wall unit 1131, the second wall unit 1132, and the third wall unit 1133 jointly form a recessed corner structure.

The fourth wall unit 1134 and the sixth wall unit 1136 also extend along the second direction Y shown in the figure and are respectively disposed on two sides of the first wall unit 1131. The fifth wall unit 1135 and the seventh wall unit 1137 extend along the third direction Z shown in the figure and are respectively disposed on two sides of the third wall unit 1133. A length of the sixth wall unit 1136 is greater than lengths of the first wall unit 1131 and the fourth wall unit 1134. A length of the fifth wall unit 1135 is greater than lengths of the third wall unit 1133 and the seventh wall unit 1137. Thus, one of a sideline of the sixth wall unit 1136 extending along the second direction Y and a sideline of the fifth wall unit 1135 extending along the third direction Z forms a long side of the electrochemical apparatus 1, and the other one forms a short side of the electrochemical apparatus 1.

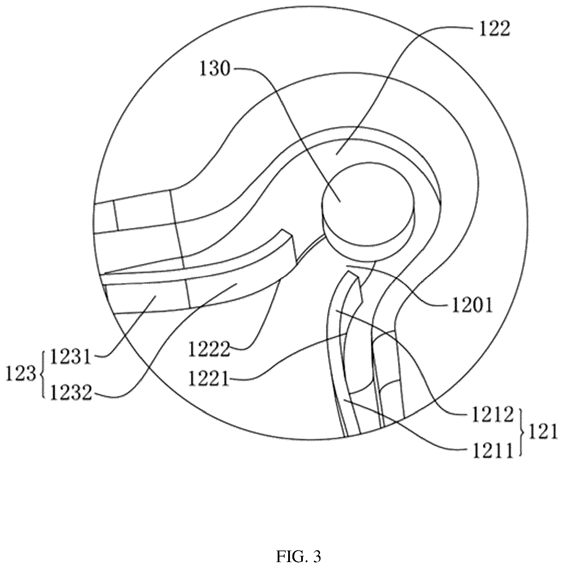

For the sealing portion 120, reference is made to FIG. 1 and FIG. 3. The sealing portion 120 is connected to the connecting wall 113 and includes a first extension wall 121, a second extension wall 122, and a third extension wall 123. The first extension wall 121 includes a first region 1211. The first region 1211 is formed by extending from a surface of the first wall unit 1131, with one end connected to the first wall unit 1131 and the other end extending towards the second wall 112. To be specific, the overall first region 1211 is disposed in a vertical direction as shown in FIG. 1. The second extension wall 122 is formed by extending from a surface of the second wall unit 1132, with one end connected to the second wall unit 1132 and the other end extending away from the second wall unit 1132. The second extension wall 122 is disposed substantially parallel to the first wall 111 and the second wall 112. The third extension wall 123 includes a third region 1231. The third region 1231 is formed by extending outwards from a surface of the third wall unit 1133, with one end connected to the third wall unit 1133 and the other end extending towards the second wall 112. To be specific, the overall third region 1231 is disposed in a vertical direction as shown in FIG. 1.

An edge of the second extension wall 122 away from the second wall unit 1132 is provided with a first notch 1201. The first notch 1201 is located between the first extension wall 121 and the third extension wall 123, and the first notch 1201 has a first edge and a second edge. When viewed in the first direction X, one end of the first extension wall 121 extends to the first notch 1201, and one end of the third extension wall 123 also extends to the first notch 1201. The provision of the first notch 1201 causes a disconnection between the first extension wall 121 and the third extension wall 123. Thus, during folding of the sealing portion 120, the first extension wall 121 and the third extension wall 123 may be respectively folded to be attached to the connecting wall 113, thereby helping to adhere the first extension wall 121 and the third extension wall 123 to the connecting wall 113. In some embodiments, when viewed in the first direction X, the first notch 1201 may alternatively run through the sealing portion 120. In some embodiments, the first edge and the second edge of the sealing portion 120 enclose the first notch 1201.

In this embodiment, an edge of the second extension wall 122 away from the second wall unit 1132 has a first sideline 1221 connected to the first region 1211, and an edge of the second extension wall 122 away from the second wall unit 1132 has a second sideline 1222 connected to the third region 1231. Correspondingly, the first extension wall 121 further includes a second region 1212. The second region 1212 is formed by extending from the first sideline 1221, with one end connected to the first sideline 1221 of the second extension wall and the other end extending towards the second wall 112. The second region 1212 and the first region 1211 form an integrated structure. When viewed in the first direction X, one end of the first extension wall 121 is connected to the connecting wall 113, and the other end extends towards the second wall 112. The third extension wall 123 further includes a fourth region 1232. The fourth region 1232 is formed by extending from the second sideline 1222, with one end connected to the second sideline 1222 of the second extension wall and the other end extending towards the second wall 112. The fourth region 1232 and the third region 1231 form an integrated structure. To be specific, the first notch 1201 is located between the second region 1212 and the fourth region 1232.

In addition, in this embodiment, the sealing portion 120 further includes a fourth extension wall 124, a fifth extension wall 125, and a sixth extension wall 126. Specifically, reference is still made to FIG. 1. The fourth extension wall 124 extends from a surface of the fourth wall unit 1134, with one end connected to the fourth wall unit 1134 and the other end extending towards the second wall 112. The fifth extension wall 125 extends from a surface of the fifth wall unit 1135, with one end connected to the fifth wall unit 1135 and the other end extending towards the second wall 112. The sixth extension wall 126 extends from a surface of the seventh wall unit 1137, with one end connected to the seventh wall unit 1137 and the other end extending away from the seventh wall unit 1137. The sixth extension wall 126 is disposed substantially parallel to the first wall 111 and the second wall 112. The sixth extension wall 126, the first extension wall 121, the second extension wall 122, the third extension wall 123, the fourth extension wall 124, and the fifth extension wall 125 are sequentially connected to form an integrated structure.

In this embodiment, the electrochemical apparatus further includes a second adhesive layer. Specifically, at least one of the first region 1211, the third region 1211, the fourth extension wall 124, the fifth extension wall 125, or the sixth extension wall 126 is adhered to the accommodating portion 110 through the second adhesive layer.

To facilitate a better understanding of the housing 100, the following provides a brief description of a manufacturing process of the housing 100.

In this embodiment, the electrochemical apparatus 1 is a pouch battery, and the housing 100 includes a base shell and a cover disposed facing each other. The base shell is a topless box structure, including a cavity portion and a flange portion. The cavity portion is provided with an L-shaped concave cavity with one end open. The cavity portion extends outwards from an edge of the concave cavity to form the flange portion. To be specific, the flange portion extends around the open end of the cavity portion. The cover faces the concave cavity. An edge of the cover is fixedly attached to the flange portion to form the sealing portion 120 which seals the concave cavity. Thus, a portion of the housing 100 outside the sealing portion forms the accommodating portion 110 of the housing 100. Preferably, edges of the base shell and the cover are fixedly connected through hot melting. Certainly, in other embodiments of this application, the base shell and the cover may alternatively be fixed through adhesion or the like. However, compared with adhesion, the hot melting connection method can realize fixation of the base shell and the cover without using an additional material as well as without spending time for drying an adhesive, thereby achieving higher connection efficiency.

In this embodiment, the base shell and the cover are integrated. Specifically, the housing 100 includes a multi-layer sheet. The multi-layer sheet specifically includes an insulating material layer (not shown in the figure), a metal material layer (not shown in the figure), and another insulating material layer (not shown in the figure) stacked sequentially. More specifically, the multi-layer sheet includes a first portion and a second portion disposed adjacent to each other. The first portion and the second portion each include the insulating material layer, the metal material layer, and the another insulating material layer stacked sequentially. A middle region of the first portion is recessed to be totally misaligned from an edge region of the first portion in a thickness direction of the multi-layer sheet, thus forming the base shell with the concave cavity. To be specific, the middle region of the first portion forms the cavity portion of the base shell, and the edge region of the first portion forms the flange portion of the base shell. Optionally, the middle region of the first portion is formed through punching. The second portion is connected to an edge of the first portion and folded towards a side facing the concave cavity to seal the concave cavity, thus forming the housing 100 with an accommodating chamber inside, where a junction region of the second portion and the first portion is located at the sixth wall unit. The edges of the first portion and the second portion are correspondingly attached and fixed to form the sealing portion 120. It is worth noting that various multi-layer sheets are selected. For example, in some embodiments, the metal material layer is made of aluminum foil, one insulating material layer is made of polyethylene terephthalate, and the another insulating material layer is made of polyethylene. For another example, in some other embodiments, the metal material layer is still made of aluminum foil, and the two insulating material layers are both made of polyethylene terephthalate. For still another example, in still some other embodiments, the metal material layer is still made of aluminum foil, and the two insulating material layers are both made of a mixture of polyethylene terephthalate and polyethylene. The structure of the multi-layer sheet is not specifically limited in this application. Certainly, in other embodiments of this application, the base shell and the cover can alternatively be two separate structures that are stacked and fixed through hot melting or adhesion. Correspondingly, the sealing portion further includes a seventh extension wall formed by extending from the sixth wall unit.

It is worth noting that the provision of the first notch 1201 facilitates the folding of the first extension wall 121 and the third extension wall 123, but the provision also makes the sealing portion 120 relatively weak at this position. When the electrochemical apparatus 1 or an electronic device provided with the electrochemical apparatus 1 drops accidentally, the sealing portion 120 is likely to be further torn on the basis of the first notch 1201. If the tear extends to the second wall unit 1132, the housing 100 may be broken due to the tear, leading to electrolyte leakage or allowing moisture and dust to enter the housing 100, and thus causing a failure in normal work of the electrochemical apparatus 1. To reduce the above risk, the housing 100 further includes a first adhesive layer 130. The first adhesive layer 130 is disposed at the sealing portion 120, and in the thickness direction of the housing 100, a projection of the first adhesive layer 130 covers at least part of the first notch 1201 and connects the first edge and the second edge. Thus, when the second extension wall 122 receives an impact, part of an impact force is transferred to the first adhesive layer 130 and is released via the first adhesive layer 130, such that the impact force received by the second extension wall 122 is reduced to reduce the risk of the second extension wall 122 being torn, thereby reducing the risk of the housing 100 being broken.

In this embodiment, when viewed in the first direction X, the first notch 1201 has a first side close to the first extension wall 121 and a second side close to the third extension wall 123; the first side and the second side are disposed opposite each other; and the first adhesive layer 130 covers both at least part of the first side and at least part of the second side. Thus, the first notch 1201 divides the second extension wall 122 into two portions on two sides of the first notch 1201, but the first adhesive layer 130 adheres the two portions to each other, making the two portions unlikely to be further torn before the first adhesive layer 130 is torn. Therefore, the provision of the first adhesive layer 130 can effectively reduce the risk of the second extension wall 122 being torn. Optionally, the first adhesive layer 130 is disposed on a side of the second extension wall 122 facing the second wall 112. Since a distance is present between the second wall 112 and a side of the second extension wall 122 facing the second wall 112, and an outer surface of the second wall unit 1132 is recessed towards the accommodating chamber, disposing the first adhesive layer 130 on the side of the second extension wall 122 facing the second wall 112 does not additionally increase a volume occupied by the electrochemical apparatus 1. It can be understood that the first adhesive layer 130 being disposed on the side of the second extension wall 122 facing the second wall 112 is used as an example for description in this embodiment, but this application is not limited thereto. For example, in some other embodiments of this application, the first adhesive layer 130 may also be disposed on a side of the second extension wall 122 facing the first wall 111. For another example, in some other embodiments of this application, the first notch 1201 may also be filled with the first adhesive layer 130.

Further, the first adhesive layer 130 is fixedly adhered to the second region 1212. The first region 1211 is attached and fixed to the first wall unit 1131. During transportation, assembly, and use of the electrochemical apparatus 1, the first region 1211 does not move relative to the accommodating portion 110; whereas, the second region 1212 is not fixed to the first wall unit 1131 and thus may move relative to the first wall unit 1131, thus affecting the fixation strength between the first region 1211 and the first wall unit 1131. The adhesion between the first adhesive layer 130 and the second region 1212 can restrain the second region 1212, such that a movement degree of the second region 1212 relative to the first region 1211 is significantly reduced or the second region 1212 even cannot move relatively, thereby ensuring that the overall first extension wall 121 is maintained at a vertically disposed state for a long time as shown in FIG. 1 and preventing the electrochemical apparatus 1 from occupying large space.

Further, the first adhesive layer 130 is fixedly adhered to the fourth region 1232. The third region 1311 is attached and fixed to the third wall unit 1133. During transportation, assembly, and use of the electrochemical apparatus 1, the third region 1311 does not move relative to the accommodating portion 110; whereas, the fourth region 1232 is not fixed to the third wall unit 1133 and thus may move relative to the third wall unit 1133, thus affecting the fixation strength between the third region 1311 and the third wall unit 1133. The adhesion between the first adhesive layer 130 and the fourth region 1232 can restrain the fourth region 1232, such that a movement degree of the fourth region 1232 relative to the third region 1311 is significantly reduced or the fourth region 1232 even cannot move relatively, thereby ensuring that the overall third extension wall 123 is maintained at a vertically disposed state for a long time as shown in FIG. 1 and preventing the electrochemical apparatus 1 from occupying large space.

Further, the first adhesive layer 130 is fixedly adhered to the second wall unit 1132. Since the second wall unit 1132 is made of a flexible material, the connection between the second wall unit 1132 and the first adhesive layer 130 allows the second wall unit 1132 to release more of an impact force when the first adhesive layer 130 receives the impact force, thereby reducing the risk of the first adhesive layer 130 and the second extension wall 122 being torn.

The first adhesive layer 130 is in various shapes. For example, in some embodiments, when viewed in the first direction X, the first adhesive layer 130 is circular. For another example, in some embodiments, when viewed in the first direction X, the first adhesive layer 130 is elliptic. For still another example, in some embodiments, when viewed in the first direction X, the first adhesive layer 130 is fan-shaped.

The first adhesive layer 130 is also made of various materials. The first adhesive layer 130 is cured glue. After the first extension wall 121 and the third extension wall 123 are folded, flowable glue is dropwise added to the first notch 1201. Once the flowable glue is cured, the first adhesive layer 130 is formed. Preferably, high-viscosity, high-strength, and fast-curing glue is used as the first adhesive layer 130. In some embodiments, the first adhesive layer 130 includes a single-component adhesive. For example, the single-component epoxy adhesive includes an epoxy resin matrix and a curing agent, where the epoxy resin matrix includes at least one of the following materials: glycidyl ether epoxy resin, glycidyl ester epoxy resin, glycidyl amine epoxy resin, linear aliphatic epoxy resin, or cycloaliphatic epoxy resin; and the curing agent includes at least one of the following materials: dicyandiamide, aromatic diamine, imidazole, organic hydrazide compound, Lewis acid-amine coordination complex, thermosensitive microencapsulated curing agent, aromatic diazonium salt, diaryliodonium compound, or triarylsulfonium compound. In some embodiments, the first adhesive layer 130 includes a two-component adhesive. For example, the two-component adhesive includes epoxy resin adhesive A and B. Component A includes epoxy resin and a solvent, where the solvent includes at least one of the following materials: ethanol, propanol, propylene glycol, isopropanol, ethylene glycol monobutyl ether, acetone, butanone, benzene, or dimethylbenzene. Component B includes a curing agent and fillers, where the curing agent includes at least one of the following materials: aliphatic amine, cycloaliphatic amine, aromatic amine, polyamide, anhydride, resin, tertiary amine, anhydride, or aromatic curing agent; and the fillers include at least one of the following materials: asbestos or glass fiber, quartz powder, porcelain powder, iron powder, cement, emery, alumina, porcelain powder, asbestos powder, silica powder, aluminum powder, copper powder, iron powder, graphite powder, talcum powder, emery, or mica powder. A mass ratio of component A to component B is 0.98 to 1.02. In some embodiments, the first adhesive layer 130 includes a UV adhesive. The UV adhesive includes a prepolymer and an initiator, where the prepolymer may include any one of epoxy acrylate, polyurethane acrylate, polyether acrylate, polyester acrylate, and acrylic resin; and the initiator may include 2-hydroxy-2-methyl-1-phenyl-1-acetone, benzophenone, or the like.

In some embodiments, the housing 100 satisfies 2 ≤ σ₁/σ₂ ≤ 10, where σ₁ represents a tensile strength of the first adhesive layer 130, and σ₂ represents a tensile strength of the second extension wall 122. If σ₁/σ₂ < 2, a tensile limit of the first adhesive layer 130 is lower than a tensile limit of the second extension wall 122. Thus, the first adhesive layer 130 has an effect of assisting in releasing an impact force, but has a lower tensile limit, so the first adhesive layer may be torn earlier than the second extension wall 122 after experiencing a small times of impact, and thus cannot continue to assist in releasing the impact force. The setting of σ₁/σ₂ ≥ 2 allows the first adhesive layer 130 to have a significantly higher tensile limit than the second extension wall 122, thereby frequently releasing the impact force for the second extension wall 122 for a long time. Preferably, 4 ≤ σ₁/σ₂ ≤ 6. The tensile strength is tested using various methods. For example, in some embodiments, persons skilled in the art may first separate the first adhesive layer 130 from the second extension wall 122, then cut the first adhesive layer 130 into a strip-shaped first sample, and separate a strip-shaped second sample from the second extension wall 122; subsequently, a tensile strength tester is used to test the tensile strength of the first sample and the tensile strength of the second sample respectively at a tensile speed of 60 mm/min, and then the tensile strength of the first adhesive layer 130 and the tensile strength of the second extension wall 122 are respectively obtained based on an acting force generated when each sample is broken and a cross-sectional area of a broken surface.

In some embodiments, the housing 100 satisfies 1.2 ≤ F₁/F₂ ≤ 10, where F₁ represents a peeling force between the first adhesive layer 130 and the second extension wall 122. The sealing portion 120 includes two layers of multi-layer sheets. Each layer of multi-layer sheet includes a metal material layer and insulating material layers disposed on two surfaces of the metal material layer. To be specific, the sealing portion 120 includes a metal material layer and insulating material layers disposed on the surfaces of the metal material layer. The first adhesive layer 130 is disposed on a surface of the insulating material layer, and F₂ represents a peeling force between the metal material layer and the insulating material layer. Such setting ensures that an adhesion force between the first adhesive layer 130 and the second extension wall 122 is greater than an adhesion force between the metal material layer and the insulating material layer in the sealing portion 120. Even if slippage occurs between the first adhesive layer 130 and the second extension wall 122, the slippage occurs after slippage between the metal material layer and the insulating material layer in the sealing portion 120. To be specific, a larger adhesion force is ensured between the first adhesive layer 130 and the second extension wall 122, thereby reducing the risk of separation of the first adhesive layer 130 from the second extension wall 122 during use of the electrochemical apparatus 1. Preferably, 1.2 ≤ F₁/F₂ ≤ 2. The peeling force is also tested using various methods.

For example, in some embodiments, the peeling force F₁ between the first adhesive layer 130 and the second extension wall 122 may be tested using the following method.

1. 5 samples in which the sealing portion of the housing is adhered to the first adhesive layer 130 are prepared, where each sample is in a strip shape with a length of 10 mm and a width of 5 mm.

2. The sealing portion 120 is adhered to a glass plate using glue, and an AL-2520 aluminum standard foil is adhered to the first adhesive layer 130 using glue, and then these materials are prepared for later use for one hour before the strength test.

3. The samples and fixture are arranged to ensure that each sample is peeled along a length direction thereof at a speed of 10 mm/min, such that the sealing portion 120 is separated from the first adhesive layer 130.

4. Peeling strengths of each sample at 2 mm, 4 mm, 6 mm, and 8 mm are recorded respectively, then an average peeling strength of the sample at these four positions is calculated as a peeling force of the sample.

5. An average peeling strength of the 5 samples is obtained based on the peeling forces of the 5 samples, and is used as the peeling force between the first adhesive layer 130 and the second extension wall 122.

For example, in some embodiments, the peeling force F₂ between the metal material layer and the insulating material layer may be tested using the following method.
1. 5 strip samples having a dimension of 50 mm*125 mm are separated from a layer of multi-layer sheet of the housing.
2. The insulating material layer is adhered to the glass plate using glue, an AL-2520 aluminum standard foil is adhered to another insulating material layer using a pressure-sensitive adhesive, and then these materials are prepared for later use for one hour before the strength test.
3. The samples and fixture are arranged, and a program is selected to ensure that each sample is peeled along a length direction thereof at a speed of 60 mm/min, so as to separate the insulating material layer from the metal material layer.
4. Strengths of each sample at 20 mm, 40 mm, 60 mm, and 80 mm are recorded respectively, and then an average peeling strength of the sample at these four positions is calculated as the peeling force of the sample.
5. An average peeling strength of the 5 samples is obtained based on the peeling forces of the 5 samples, and is used as the peeling force F₂ between the metal material layer and the insulating material layer.

In some embodiments, the housing 100 satisfies 1.3 ≤ H₁/H₂ ≤ 10, where H₁ represents a hardness of the first adhesive layer 130, and H₂ represents a hardness of the second extension wall 122. Preferably, 2 ≤ H₁/H₂ ≤ 4. The hardness is also tested using various methods. For example, in some embodiments, the hardness of the first adhesive layer 130 is tested using the following method. First, an independent sample of the first adhesive layer 130 is obtained; then, the sample is placed on a firm plane, a D-type Shore durometer is held in a way that a press needle is at least 12 mm away from an edge of the sample and stably pressed a press leg on the sample such that the press needle is vertically pressed into the sample, and a number is read within 1s after the press leg is in full contact with the sample; and subsequently, hardness at different positions that are at least 6 mm away from a measuring point is measured 5 times, and an average value of the hardness (a micropore material is at least 15 mm away from the measuring point) is used as a hardness H₁ of the first adhesive layer 130. To stabilize measurement conditions and improve measurement accuracy, the durometer should be installed on a same model of measuring frame produced in match for measurement. For example, in some embodiments, the hardness of the second extension wall 122 is tested using the following method. First, an independent sample of the second extension wall 122 is obtained; then, the sample is placed on a firm plane, a D-type Shore durometer is held in a way that a press needle is at least 12 mm away from an edge of the sample and stably presses a press leg on the sample such that the press needle is vertically pressed into the sample, and a number is read within 1s after the press leg is in full contact with the sample; and subsequently, hardness at different positions that are at least 6 mm away from a measuring point is measured 5 times, and an average value of the hardness (a micropore material is at least 15 mm away from the measuring point) is used as a hardness H₂ of the second extension wall 122. Similarly, to stabilize the measurement conditions and improve the measurement accuracy, the durometer should be installed on a same model of measuring frame produced in match for measurement.

For the electrode assembly 200, reference is made to FIG. 2. The electrode assembly 200 is accommodated in the accommodating chamber 101 and includes a first electrode plate 210, a second electrode plate 220, and a separator 230. The first electrode plate 210 and the second electrode plate 220 have opposite polarities, and the separator 230 is disposed therebetween for separation. Specifically, the first electrode plate 210 and the second electrode plate 220 are both in an L shape fitting with the shape of the housing 100, and are alternatively disposed in the first direction X. The separator 230 is disposed between adjacent first electrode plate 210 and second electrode plate 220.

For the tab 300, reference is made to FIG. 1 and FIG. 2. The tab 300 is connected to the electrode assembly 200, with one end extending out of the housing 100 through the sealing portion 120. Specifically, the electrochemical apparatus 1 includes two tabs 300. One tab 300 is connected to the first electrode plate 210 and partially extends out of the housing 100 through the sixth extension wall 126, and the other tab 300 is connected to the second electrode plate 220 and partially extends out of the housing 100 through the sixth extension wall 126.

In conclusion, the electrochemical apparatus 1 provided in some embodiments of this application includes a housing 100, an electrode assembly 200, and tabs 300. The housing 100 includes an accommodating portion 110, a sealing portion 120, and a first adhesive layer 130. The accommodating portion 110 defines an accommodating chamber 101. The sealing portion 120 is connected to an outer surface of the accommodating portion and is a position for sealing in the housing 100. An edge of the sealing portion 120 is provided with a first notch 1201. The first adhesive layer 130 is disposed at the sealing portion 120 and covers at least part of the first notch 1201.

When the second extension wall 120 receives an impact, part of an impact force is transferred to the first adhesive layer 130 and is released via the first adhesive layer 130. Thus, the impact force received by the second extension wall 120 is accordingly reduced, thereby reducing the risk of the second extension wall 120 being torn. To be specific, the electrochemical apparatus 1 provided in some embodiments of this application can reduce the risk that tear is likely to occur at the notch of the sealing portion 120 of the current housing 100.

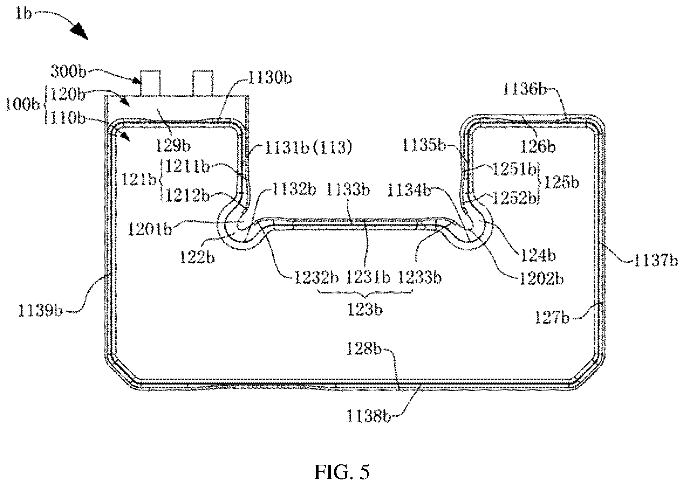

It should be understood that although the sealing portion 120 being provided with one notch, that is, the first notch 1201, is used as an example for description in the above embodiments, this application is not limited thereto. In other embodiments of this application, the sealing portion 120 may alternatively be provided with two or more notches. For example, FIG. 5 is a schematic diagram of an electrochemical apparatus 1b according to another embodiment of this application. The electrochemical apparatus 1b also includes a housing 100b, an electrode assembly, and tabs 300b, where the housing 100b also includes an accommodating portion 110b and a sealing portion 120b. The electrochemical apparatus 1b and the electrochemical apparatus 1 in the foregoing embodiments differs in that:
when viewed in the first direction X, in the electrochemical apparatus 1, the accommodating portion 110 of the housing 100 is L-shaped, the sealing portion 120 is provided with a first notch 1201, and the first adhesive layer 130 covers at least part of the first notch 1201;
whereas, in the electrochemical apparatus 1b, the accommodating portion 110b of the housing 100b is U-shaped; in addition to the first notch 1201b, the sealing portion 120b is additionally provided with a second notch 1202b; and correspondingly, the electrochemical apparatus 1b further includes a second adhesive layer 140b, and the second adhesive layer 140b covers at least part of the second notch 1202b.

Specifically, the accommodating portion 110b includes a first wall, a second wall, and a connecting wall 113b disposed therebetween. The first wall and the second wall are substantially U-shaped and disposed opposite each other in the first direction X, and the connecting wall 113b is disposed therebetween and are connected to the first wall and the second wall respectively. The connecting wall 113b includes a first wall unit 1131b, a second wall unit 1132b, a third wall unit 1133b, a fourth wall unit 1134b, a fifth wall unit 1135b, a sixth wall unit 1136b, a seventh wall unit 1137b, an eighth wall unit 1138b, a ninth wall unit 1139b, and a tenth wall unit 1130b disposed sequentially along an edge contour of the first wall. When viewed in the first direction X, the first wall unit 1131b extends along the second direction Y as shown in the figure, the third wall unit 1133b extends along the third direction Z as shown in the figure, and the fifth wall unit 1135b extends in the second direction Y as shown in the figure; the second wall unit 1132b connects the first wall unit 1131b and the third wall unit 1133b, with an outer surface recessed towards the accommodating chamber; and the fourth wall unit 1134b connects the third wall unit 1133b and the fifth wall unit 1135b, with an outer surface recessed towards the accommodating chamber. The first wall unit 1131b, the second wall unit 1132b, and the third wall unit 1133b jointly form a recessed corner structure, and the third wall unit 1133b, the fourth wall unit 1134b, and the fifth wall unit 1135b jointly form another recessed corner structure.

The sealing portion 120b includes a first extension wall 121b, a second extension wall 122b, a third extension wall 123b, a fourth extension wall 124b, a fifth extension wall 125b, a sixth extension wall 126b, a seventh extension wall 127b, an eighth extension wall 128b, and a ninth extension wall 129b. The first extension wall 121b includes a first region 1211b, and the first region 1211b is formed by extending from a surface of the first wall unit 1131b, with one end connected to the first wall unit 1131b and the other end extending towards the second wall. The second extension wall 122b is formed by extending from a surface of the second wall unit 1132b, with one end connected to the second wall unit 1132b and the other end extending away from the second wall unit 1132b. The second extension wall 122b is disposed substantially parallel to the first wall and the second wall. The third extension wall 123b includes a third region 1231b, and the third region 1231b is formed by extending outwards from a surface of the third wall unit 1133b, with one end connected to the third wall unit 1133 and the other end extending towards the second wall 112. The fourth extension wall 124 is formed by extending from a surface of the fourth wall unit 1134, with one end connected to the fourth wall unit 1134b and the other end extending away from the fourth wall unit 1134b. The fourth extension wall 124b is disposed substantially parallel to the first wall and the second wall. The fifth extension wall 125 includes a sixth region 1251b, and the sixth region is formed by extending outwards from a surface of the fifth wall unit 1135, with one end connected to the fifth wall unit 1135 and the other end extending towards the second wall. The sixth extension wall 126 is formed by extending from a surface of the sixth wall unit 1136b, with one end connected to the sixth wall unit 1136b and the other end extending towards the second wall. The seventh extension wall 127 is formed by extending from a surface of the seventh wall unit 1137b, with one end connected to the seventh wall unit 1137b and the other end extending towards the second wall. The eighth extension wall 128b is formed by extending from a surface of the eighth wall unit 1138b, with one end connected to the eighth wall unit 1138b and the other end extending towards the second wall. The ninth extension wall 129b is formed by extending from a surface of the tenth wall unit 1130b, with one end connected to the tenth wall unit 1130b and the other end extending away from the tenth wall unit 1130. The ninth extension wall 129b is disposed substantially parallel to the first wall and the second wall. The tab extends out of the housing 100b through the ninth extension wall 129b.

The second extension wall 122b is provided with a first notch 1201b. The first notch 1201b is disposed in a substantially same manner as the first notch 1201. The first extension wall 121b further includes a second region 1212b. The third extension wall 123b further includes a fourth region 1232b. The second region 1212b and the fourth region 1232b are disposed in a substantially same manner as the second region 1212 and the fourth region 1232, which is not described herein again.

The fourth extension wall 124b is provided with a second notch 1202b. The second notch 1202b is located between the third extension wall 123b and the fifth extension wall 125b. When viewed in the first direction X, one end of the third extension wall 123b away from the second extension wall 122b extends to the second notch 1202b, and one end of the fifth extension wall 125b also extends to the second notch 1202b. The provision of the second notch 1202b causes a disconnection between the third extension wall 123b and the fifth extension wall 125b. Thus, during folding of the sealing portion 120b, the third extension wall 123b and the fifth extension wall 125b may be respectively folded to be attached to the connecting wall 113b, facilitating adhesion of the third extension wall 123b and the fifth extension wall 125b to the connecting wall 113b.

In this embodiment, an edge of the fourth extension wall 124b away from the fourth wall unit 1134b has a third sideline connected to the third region 1231b, and an edge of the fourth extension wall 124b away from the fourth wall unit 1134b has a fourth sideline connected to the sixth region 1251b. Correspondingly, the third extension wall 123b further includes a fifth region 1233b. The second region 1233b is formed by extending from the third sideline, with one end connected to the third sideline of the fourth extension wall and the other end extending towards the second wall. The fifth region 1233b and the third region 1231b form an integrated structure. The fifth extension wall 125b further includes a seventh region 1252b. The seventh region 1252b is formed by extending from the fourth sideline, with one end connected to the fourth sideline of the fourth extension wall and the other end extending towards the second wall. The seventh region 1232 and the sixth region 1231 form an integrated structure. To be specific, the first notch 1201 is located between the fifth region 1233 and the seventh region 1252.

The second adhesive layer 140b is disposed on the fourth extension wall 124b and covers at least part of the second notch 1202. For specific arrangement of the second adhesive layer 140 on the fourth extension wall 124b, reference is made to the arrangement manner of the first adhesive layer 130 on the second extension wall 122, which is not described herein again.

In the electrochemical apparatus 1b provided in this embodiment, the sealing portion 120b of the housing 100b is provided with two notches, which are the first notch 1201b and the second notch 1202b. The first adhesive layer 130b covers at least part of the first notch 1201b, and the second adhesive layer 140b covers at least part of the second notch 1202b. When the second extension wall 122b and the fourth extension wall 124b receive an impact, part of an impact force is transferred to the first adhesive layer 130b and the second adhesive layer 140b and is released via the first adhesive layer 130b and the second adhesive layer 140b. Thus, the impact force received by the second extension wall 122b and the fourth extension wall 124b is accordingly reduced, thereby reducing the risk of the second extension wall 122b and the fourth extension wall 124b being torn. To be specific, the electrochemical apparatus 1 provided in some embodiments of this application can reduce the risk that tear is likely to occur at the notch of the sealing portion 120b of the current housing 100b.

Based on the same inventive concept, this application further provides a housing, where the housing the same structure as the housing in the foregoing embodiments, which is not described herein again.

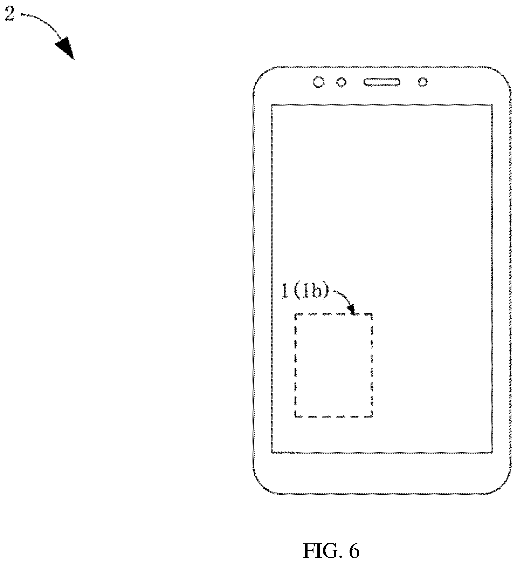

Based on the same inventive concept, another embodiment of this application further provides an electronic device 2. Specifically, reference is made to FIG. 6, which is a schematic diagram of the electronic device 2. With reference to FIG. 1 to FIG. 5, the electronic device 2 includes the electrochemical apparatus 1 (or 1b) described in any of the foregoing embodiments. In this embodiment, the electronic device is a mobile phone. It can be understood that in other embodiments of this application, the electronic device may alternatively be any other electronic device such as a tablet, a computer, a drone, a remote control, or an electric vehicle.

With the foregoing electrochemical apparatus, the electronic device 2 can reduce the risk that tear is likely to occur at the notch of the sealing portion of the housing in the electrochemical apparatus.

In conclusion, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. A housing, comprising an accommodating portion and a sealing portion, wherein the accommodating portion defines an accommodating chamber, and the sealing portion is connected to an outer surface of the accommodating portion; and
the housing comprises a first adhesive layer; an edge of the sealing portion is provided with a first notch; the first notch has a first edge and a second edge; the first adhesive layer is disposed at the sealing portion; and in a thickness direction of the housing, a projection of the first adhesive layer covers at least part of the first notch and connects the first edge and the second edge.

2. The housing according to claim 1, wherein the accommodating portion comprises a first wall, a second wall, and a connecting wall; the first wall and the second wall are disposed opposite to each other in a first direction; the connecting wall connects the first wall and the second wall; the first wall, the second wall, and the connecting wall jointly enclose the accommodating chamber; the sealing portion is connected to the connecting wall; and
the first direction is the thickness direction of the housing.

3. The housing according to claim 2, wherein the connecting wall comprises a first wall unit, a second wall unit, and a third wall unit connected sequentially along an edge contour of the first wall; when viewed in the thickness direction, an extension direction of the first wall unit intersects with an extension direction of the third wall unit; an outer surface of the second wall unit is recessed towards the accommodating chamber; the first wall unit, the second wall unit, and the third wall unit jointly form a recessed corner structure; and
the sealing portion comprises a first extension wall, a second extension wall, and a third extension wall; the first extension wall comprises a first region; the first region is formed by extending outwards from a surface of the first wall unit; the second extension wall is formed by extending outwards from a surface of the second wall unit; an edge of the second extension wall is provided with the first notch; the third extension wall comprises a third region; the third region is formed by extending outwards from a surface of the third wall unit; and in the first direction, one end of the first extension wall and one end of the third extension wall are respectively connected to the connecting wall, and the other end of the first extension wall and the other end of the third extension wall respectively extend towards the second wall.

4. The housing according to claim 3, wherein
an edge of the second extension wall away from the second wall unit has a first sideline connected to the first region, the first extension wall further comprises a second region connected to the first region, and the second region extends from the first sideline towards the second wall; and
an edge of the second extension wall away from the second wall unit has a second sideline connected to the third region, the third extension wall further comprises a fourth region connected to the third region, and the fourth region extends from the second sideline towards the second wall.

5. The housing according to claim 4, wherein
the first adhesive layer is fixedly adhered to the second region; and/or
the first adhesive layer is fixedly adhered to the fourth region; and/or
the first adhesive layer is fixedly adhered to the second wall unit.

6. The housing according to claim 2, wherein the first notch is filled with the first adhesive layer.

7. The housing according to claim 2, wherein when viewed in the first direction, the first adhesive layer is circular, elliptic, or fan-shaped.

8. The housing according to claim 3, wherein the connecting wall comprises a third wall unit, a fourth wall unit, and a fifth wall unit connected sequentially along the edge contour of the first wall; when viewed in the first direction, an extension direction of the third wall unit intersects with an extension direction of the fifth wall unit; an outer surface of the fourth wall unit is recessed towards the accommodating chamber; the third wall unit, the fourth wall unit, and the fifth wall unit jointly form a recessed corner structure; and
the sealing portion further comprises a fourth extension wall and a fifth extension wall; the fourth extension wall is formed by extending outwards from a surface of the fourth wall unit; an edge of the fourth extension wall is provided with a second notch; the fifth extension wall comprises a sixth region; the sixth region is formed by extending outwards from a surface of the fifth wall unit; in the first direction, one end of the fifth extension wall is connected to the connecting wall, and the other end of the fifth extension wall extends towards the second wall; and
the housing further comprises a second adhesive layer, and the second adhesive layer is disposed at the sealing portion and covers at least part of the second notch.

9. The housing according to claim 8, wherein
an edge of the fourth extension wall away from the fourth wall unit has a third sideline connected to the third region, the third extension wall further comprises a fifth region, and the fifth region extends from the third sideline towards the second wall; and
an edge of the fourth extension wall away from the fourth wall unit has a fourth sideline connected to the sixth region, the fifth extension wall further comprises a seventh region, and the seventh region extends from the fourth sideline towards the second wall.

10. The housing according to claim 8, wherein when viewed in the first direction, the accommodating portion is L-shaped or U-shaped.

11. The housing according to claim 3, wherein a tensile strength of the first adhesive layer is σ₁ and a tensile strength of the second extension wall is σ₂, wherein 2 ≤ σ₁/σ₂ ≤ 10.

12. The housing according to claim 11, wherein 3 ≤ σ₁/σ₂ ≤ 4.

13. The housing according to claim 3, wherein a peeling force between the first adhesive layer and the second extension wall is F₁; and
the sealing portion comprises a metal material layer and an insulating material layer disposed on a surface of the metal material layer, the first adhesive layer is disposed on a surface of the insulating material layer, and a peeling force between the metal material layer and the insulating material layer is F₂, wherein 1.2 ≤ F₁/F₂ ≤ 10.

14. The housing according to claim 13, wherein 1.2 ≤ F₁/F₂ ≤ 2.

15. The housing according to claim 3, wherein a hardness of the first adhesive layer is H₁ and a hardness of the second extension wall is H₂, wherein 1.3 ≤ H₁/H₂ ≤ 10.

16. The housing according to claim 15, wherein 2 ≤ H₁/H₂ ≤ 4.

17. The housing according to any one of claims 2 to 10, wherein the sealing portion is connected to an end of the connecting wall in the first direction.

18. The housing according to claim 2, wherein when viewed in the first direction, the first notch runs through the sealing portion.

19. An electrochemical apparatus, comprising:
the housing according to any one of claims 1 to 18;
an electrode assembly accommodated in the accommodating chamber; and
a tab, wherein one end of the tab is connected to the electrode assembly, and the other end extends out of the housing through the sealing portion.

20. An electronic device, comprising the electrochemical apparatus according to claim 19.
